# EUROPEAN PATENT APPLICATION

(11) **EP 4 729 250 A1**
(43) Date of publication of application: **22.04.2026**
(21) Application number: 25209226.7
(22) Date of filing: 16.10.2025
(51) Int. Cl.: B25J 9/16

(54) **SYSTEM AND METHOD FOR AUTOMATED MISSION PLANNING FOR A SPACE ROBOTICS SYSTEM OR OTHER REMOTELY OPERATED DEVICE SYSTEM**

(30) Priority: 17.10.2024 US 202463708376 P
(71) Applicant: MacDonald, Dettwiler and Associates Inc., Brampton, Ontario L6Y 6K7 (CA)
(72) Inventor: Chen, Maggie, Brampton, L6Y 6K7 (CA); Langley, Christopher Stewart, Brampton, L6Y 6K7 (CA); El Samid, Nader Abu, Brampton, L6Y 6K7 (CA)
(74) Representative: Mewburn Ellis LLP

(57) **Abstract**

Systems and methods of automated task planning in a remotely operated device system are provided. The method includes storing a domain model for modeling a domain of the remotely operated device system and a task library including a plurality of subgoals each mapped to a corresponding subtask or set of subtasks that achieves the subgoal, the task library being filterable by subgoal, and receiving, through a human-machine interface, a user input including at least one goal and initial conditions. The method further includes performing, with a task planner module: automatically decomposing the at least one goal into subgoals; querying the task library for matching subtasks using the subgoals; generating a sequence of actions using the initial conditions, the domain model, and the matching subtasks returned by the task library; returning the sequence of actions as a task to the human-machine interface; and displaying the task in the human-machine interface.

## Description

### Technical Field

The following relates generally to space robotics, and more particularly to systems and methods for mission planning on space robotic systems.

### Introduction

There is a need to adopt autonomy technologies in space robotics systems as a way of reducing operational workload, turnaround time, and operating cost. This will be especially valuable as the cadence of robotic operations is increased, such as for new systems intended to be staffed by a smaller number of flight crew compared to older systems.

Current approaches to mission planning on space robotics systems include the labor-intensive process of developing planning products manually by a ground team. For example, the ground team may plan out elaborate flight procedures and task scripts detailing every step of an operation as well as associated commands for the robotic system to execute. The robotic system then executes with no context into the operation as a whole (it is simply executing commands it is given).

It is thus desired to have a means of automatically producing both task scripts for execution on flight and procedures for the operator to issue commands from.

It is also recognized that such challenges may also apply to other remotely controlled or operated devices or systems, including those with autonomous machines or robotic devices.

Accordingly, there is a need for an improved system and method for mission planning on robotic systems and other remotely controlled or operated systems that overcomes at least some of the disadvantages of existing systems and methods.

### Summary

A method of automated task planning in a remotely operated device system is provided. The method is executed by one or more processors. The method includes storing, in a data storage device accessible by the one or more processors: a domain model for modeling a domain of the remotely operated device system; and a task library including a plurality of subgoals each mapped to a corresponding subtask or set of subtasks that achieves the subgoal, the task library being filterable by subgoal. The method further includes receiving, through a human-machine interface, a user input including at least one goal and initial conditions. The method further includes automatically decomposing, by a task planner module executed by the one or more processors, the at least one goal into subgoals; querying, with the task planner module, the task library for matching subtasks using the subgoals; generating, by the task planner module, a sequence of actions using the initial conditions, the domain model, and the matching subtasks returned by the task library; returning, by the task planner module, the sequence of actions as a task to the human-machine interface, the task performed by a remotely operated device of the remotely operated device system; and displaying the task in the human-machine interface.

In some embodiments, the remotely operated device system is a robotic system, the remotely operated device is a robotic device, and the task is a robotic task to be performed by the robotic device. In some embodiments, the robotic system is a space robotic system.

In some embodiments, when the task library does not return a matching subtask for at least one subgoal, the method further comprises generating one or more individual actions for the at least one subgoal ab initio using a task planning function and including the one or more individual actions in the sequence of actions generated by the task planner module.

In some embodiments, the subtask is composed of metadata and motiondata.

In some embodiments, each subtask in the task library encodes necessary pre-conditions and post-conditions.

In some embodiments, the task library is queried using the metadata.

In some embodiments, the metadata expresses aspects of the subtask that are usable to determine whether the subtask can be used in a current world state or whether a desired effect will be achieved.

In some embodiments, the metadata includes precondition data and parameterization data.

In some embodiments, the precondition data defines conditions that must be met in order to execute the subtask.

In some embodiments, the metadata includes an estimate of resource usage for the subtask.

In some embodiments, the motiondata includes a start configuration of the remotely operated device, an end configuration of the remotely operated device, and one or more intermediate configurations of the remotely operated device.

In some embodiments, the remotely operated device is a robotic manipulator comprising one or more joints, and the start configuration defines initial joint angles of the one or more joints, the end configuration defines final joint angles of the one or more joints, and the one or more intermediate configurations define a trajectory from the start configuration to the end configuration.

In some embodiments, the method further includes: determining, by the task planner module, that an action in the sequence of actions requires parameterization that the task planner module cannot plan for; calling, by the task planner module, an action refiner module mapped to action, the action refiner module configured to parameterize the action by populating the action with one or more missing parameters; refining the action with the one or more missing parameters to obtain a fully parameterized action; and composing the task with the fully parameterized action.

In some embodiments, the method further includes calling, by the task planner module, an action refiner module to fully parameterize at least one action in the sequence of actions prior to inclusion of the at least one action in the task.

In some embodiments, the method further includes: determining by the task planner module that at least one action in the sequence of actions requires further parameterization; and populating the at least one action with one or more parameters using an action refiner module called by the task planner module, wherein the action populated with the one or more parameters is included in the task.

In some embodiments, the action refiner module is a path planner module that executes a path planning algorithm configured to automatically recommend a sequence of maneuvers from an initial remotely operated device configuration to a desired remotely operated device pose or configuration using 3D models of the remotely operated device and the environment.

In some embodiments, the 3D models define keep out zones and include collision avoidance models of bodies in the environment.

In some embodiments, the sequence of maneuvers includes a sequence of configuration waypoints for motion commands to be sent to the remotely operated device for task performance.

In some embodiments, the action refiner is a view planner module configured to output a set of recommended cameras, each including recommended parameterization configurations.

In some embodiments, the parameterization configurations include pan, tilt, or zoom parameters.

In some embodiments, the domain model provides an abstract, logical model of the domain that can be used by the task planner module for reasoning, encodes the "rules of the domain", and provides logical statements that can be made, objects in the domain, and actions that the remotely operated device can take.

In some embodiments, the domain model encodes: (i) declarations of classes and objects in the domain; (ii) definition of the logical predicates that can be used to describe the states of the domain ("domain state predicates"); and (iii) definition of every standard action that can be taken by the remotely operated device, including their preconditions and effects ("standard action definition").

In some embodiments, the initial conditions refer to a state of the domain at the start of planning, expressed as a complete set of all logical predicates that evaluate to true, plus relevant numerical fluents for refining and validating actions.

In some embodiments, the remotely operated device includes a plurality of joints, and wherein the relevant numerical fluents include joint angles for the plurality of joints.

A method of automated task planning in a remotely operated device system is also provided. The method is executed by one or more processors. The method includes storing, in a data storage device accessible by the one or more processors: a task library including a plurality of subgoals each mapped to a corresponding subtask or set of subtasks that achieves the subgoal, the task library being filterable by subgoal; and at least one goal received from a user through a human-machine interface. The method further includes: automatically decomposing, by the one or more processors, the at least one goal into subgoals; querying, with the task planner module, the task library for matching subtasks using the subgoals; generating, by the one or more processors, an action or a sequence of actions using the matching subtasks returned by the task library; returning, by the task planner module, the action or sequence of actions as a task to the human-machine interface, the task performed by a remotely operated device of the remotely operated device system; and displaying the task in the human-machine interface.

In some embodiments, the remotely operated device system is a robotic system, the remotely operated device is a robotic device, and the task is a robotic task to be performed by the robotic device. In some embodiments, the robotic system is a space robotic system.

A system is also provided for implementing any one or more of the foregoing methods of automated task planning. The system includes at least one computing device including a data storage device and one or more processors in communication with the data storage device.

A system for automated task planning in a remotely operated device system is provided. The system includes an input device, a data storage device, one or more processors in communication with the data storage device, and a display device. The input device receives at least one goal from a user through a human-machine interface. The data storage device stores the at least one goal and a task library including a plurality of subgoals each mapped to a corresponding subtask or set of subtasks that achieves the subgoal, the task library being filterable by subgoal. The one or more processors: automatically decompose the at least one goal into subgoals; query the task library for matching subtasks using the subgoals; generate an action or a sequence of actions using the matching subtasks returned by the task library; and return the action or sequence of actions as a task to the human-machine interface, the task performed by a remotely operated device of the remotely operated device system. The display device displays the task in the human-machine interface.

In some embodiments, the remotely operated device system is a robotic system, the remotely operated device is a robotic device, and the task is a robotic task to be performed by the robotic device. In some embodiments, the robotic system is a space robotic system.

Other aspects and features will become apparent, to those ordinarily skilled in the art, upon review of the following description of some exemplary embodiments.

### Brief Description of the Drawings

The drawings included herewith are for illustrating various examples of articles, methods, and apparatuses of the present specification. In the drawings:
Figure 1 is a schematic diagram of a space robotics system including an automated mission planning system, according to an embodiment;
Figure 2 is a block diagram of the control device of Figure 1, according to an embodiment;
Figure 3 is a block diagram of a computer system for automated mission planning, according to an embodiment; and
Figure 4 is a block diagram of the task planning process of the automated mission planning software application of Figure 3, according to an embodiment.

### Detailed Description

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

One or more systems described herein may be implemented in computer programs executing on programmable computers, each comprising at least one processor, a data storage system (including volatile and non-volatile memory and/or storage elements), at least one input device, and at least one output device. For example, and without limitation, the programmable computer may be a programmable logic unit, a mainframe computer, server, and personal computer, cloud-based program or system, laptop, personal data assistance, cellular telephone, smartphone, or tablet device.

Each program is preferably implemented in a high-level procedural or object-oriented programming and/or scripting language to communicate with a computer system. However, the programs can be implemented in assembly or machine language, if desired. In any case, the language may be a compiled or interpreted language. Each such computer program is preferably stored on a storage media or a device readable by a general or special purpose programmable computer for configuring and operating the computer when the storage media or device is read by the computer to perform the procedures described herein.

A description of an embodiment with several components in communication with each other does not imply that all such components are required. On the contrary, a variety of optional components are described to illustrate the wide variety of possible embodiments of the present invention.

Further, although process steps, method steps, algorithms or the like may be described (in the disclosure and / or in the claims) in a sequential order, such processes, methods and algorithms may be configured to work in alternate orders. In other words, any sequence or order of steps that may be described does not necessarily indicate a requirement that the steps be performed in that order. The steps of processes described herein may be performed in any order that is practical. Further, some steps may be performed simultaneously.

When a single device or article is described herein, it will be readily apparent that more than one device / article (whether or not they cooperate) may be used in place of a single device / article. Similarly, where more than one device or article is described herein (whether or not they cooperate), it will be readily apparent that a single device / article may be used in place of the more than one device or article.

The following relates generally to space robotics, and more particularly to systems and methods for mission planning on space robotic systems.

The present disclosure provides systems and methods for automated mission planning for a device or system, wherein the device or system may be autonomous, semi-autonomous, or non-autonomous.

Those skilled in the art will appreciate that, although the embodiments described in the present disclosure are set forth in the context of robotic systems, the disclosed systems and methods for automated mission planning are not so limited. The principles and techniques described herein may be implemented in connection with any remotely operated or controllable platform or device, including, without limitation, robotic systems, satellites, planetary rovers, unmanned aerial or marine vehicles, remote-operated industrial machinery, or other systems capable of receiving and executing remote instructions. Accordingly, the scope of the present disclosure should not be construed as being limited to robotic systems alone.

As used herein, the term "remotely operated device" or "remotely operated system" encompasses systems such as satellites, planetary rovers, unmanned aerial vehicles, robotic systems, industrial machinery, or other platforms that are capable of receiving and executing commands from a remote operator, whether or not the device or system further includes autonomous functionality. For example, while example embodiments of the present disclosure describe autonomous robots/machines performing autonomous operations, the automated mission planning system may also be effectively utilized for triaging data in non-autonomous remotely operated devices as well.

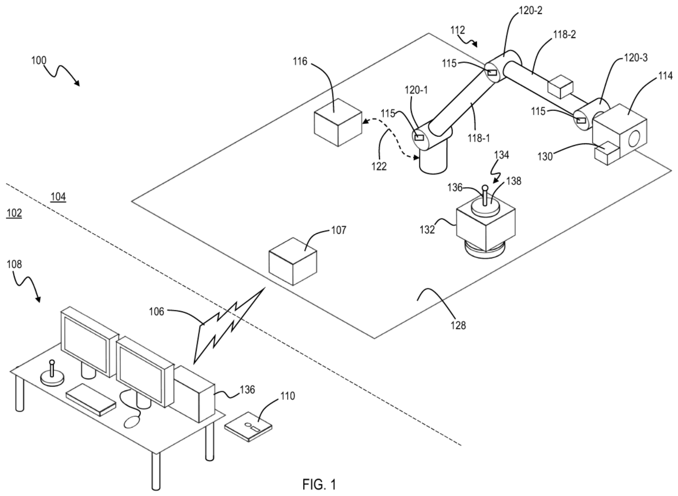

Referring now to Figure 1, shown therein is a robotic system 100 including automated mission planning, according to an embodiment.

The robotic system 100 is a space-based robotic system. The robotic system 100 may be a robotic servicing system. The robotic servicing system may be configured to provide mechanical (e.g., payload manipulation, torquing) and electrical services (e.g., power transfer, data transfer). The robotic system 100 is configured to perform one or more types of autonomous operations.

The system 100 includes a ground segment 102 and a space segment 104. The ground segment 102 and space segment 104 are in communication with one another via communication link 106. The communication link 106 includes an uplink and downlink. The manner of uplink and downlink, including any necessary hardware, software, and infrastructure, may be any suitable manner of such communication known in the art. Ground segment 102 may be used to send commands or instructions to space segment 104 and to receive data from space segment 104. Space segment 104 includes communication subsystem 107 which includes any necessary hardware and software for sending or receiving data over communication link 106. This may include a downlink unit and an uplink unit (not shown).

The space segment 102 includes a robotic device 112 for performing robotic functions and operations. The robotic device 112 in system 100 is a robotic manipulator (or robotic arm). In other embodiments, the robotic device 112 may be any other type of robotic device that may utilize or benefit from the autonomous methods and operations described herein.

The robotic device 112 is configured to perform one or more autonomous tasks (referred to simply as "tasks") based on instruction from robotic controller device 116. Each task is composed of a sequence of robotic actions. In some cases, a task may be composed of only a single action. An example may be a motion type action.

A first example task to be executed by the robotic device 112 may be to relocate a robotic payload (e.g., payload 132). The payload relocation task may include a sequence of robotic actions including: (1) grapple robotic payload; (2) unstow robotic payload; (3) move robotic arm 112 to a new location; (4) stow robotic payload; and (5) ungrapple robotic payload.

A second example task to be executed by the robotic device 112 may be an inspection task. The inspection task may include a sequence of actions including: (1) move robotic arm 112 to inspection point 1; (2) acquire image (e.g., via camera 130 or other camera mounted to device 112); (3) move robotic arm 112 to inspection point 2; (4) acquire image... (n) move robotic arm 112 to inspection point n; (n+1) acquire image.

Generally, prior to execution of a task by the robotic device 112, the task is planned through the task planning functionality of the system 100 (i.e., through operator station 108, as described below). The task planning function generates a validated task, which is uplinked to the space segment 104 via communication link 106 during an acquisition of signal (AOS) period. The validated task is received by the communication subsystem 107 and provided to the robotic controller device 116 for execution by the robotic device 112. The task may be part of a mission plan. A mission plan is a data container that bundles related tasks, procedures, and other metadata together.

In an embodiment, the robotic device 112 is a robotic manipulator configured to have end effectors (e.g., end effector 114) on the base and tip of the robot 112. A base grapple fixture is a base interface that the robotic device 112 is connected to and is used to provide the robotic device 112 with power and data. While the tip end effector remains free to maneuver and manipulate objects. When performing a walk-off using the robotic device 112, the tip end of the manipulator 112 connects to another grapple fixture with the intent of the base end disconnecting and moving to a new position, thereby becoming the tip/free end of the manipulator 112. Changing the base grapple fixture includes turning off any data and power coming from the old base and turning on data and power on the new base end.

The robotic manipulator 112 includes an end effector 114 (or end of arm tool 114) coupled to a free end of the robotic manipulator 112. The robotic manipulator 112 manipulates, moves, and positions the end effector 114. The end effector 114 may be an end effector that can be picked up and removed by the robotic manipulator 112.

The robotic system 100 includes a control device 116 executing control software for controlling movement of the robotic manipulator 112. The robotic manipulator 112 includes booms (or links) 118-1, 118-2 and joints 120-1, 120-2, and 120-3 for articulating the manipulator 102. Control device 116 may be implemented at a single device or across a plurality of devices. For example, control device 116 may be implemented partially at a control device local to the robotic device 112 and partially at an executive control device configured to determine, plan, and schedule robotic operations.

Generally, the control device 116 controls movement (e.g., rotation) of the joints 120-1, 120-2, and 120-3, thereby enabling controlled movement of the robotic manipulator 102 and ultimately of the end effector 114. The manipulator 102 and control device 116 are communicatively connected and the connection is represented as a hashed line 122 between the manipulator 102 and control device 116. Control device 116 may include computing components (e.g., processors, data storage) and other control hardware.

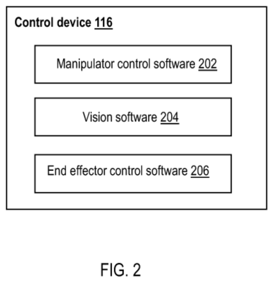

An example of the control device 116 is shown in Figure 2, according to an embodiment. The control device 116 includes manipulator control software 202, vision software 204, and end effector control software 206. The manipulator control software 202, when executed by a processor of the control device 116, controls articulation and movement of the manipulator 112, such as through controlling the articulation of joints 118. The manipulator control software 202 may receive sensor data from sensors in or on the manipulator 112 and other input data, process the input data, and generate control instructions based on the processing and send the control instructions to the manipulator 112 for execution. The vision software 204, when executed by a processor of the control device 116, processes image data acquired by vision components in the space segment 104, such as camera 130. Processing may include, for example, processing image data of a machine vision marker on payload 132 or determining a pose of the marker or payload 132 (e.g., via executing a pose estimation algorithm). The end effector control software 206, when executed, controls operation of the end effector 114. This may include operations such as grappling and provision of auxiliary services (e.g., torque transfer, power, data).

The robotic manipulator 112 and controller device 116 are coupled to platform 128. In a space-based application, the platform 128 may be a satellite or spacecraft bus, or vehicle platform (e.g., on a rover or the like). In some embodiments, robotic manipulator 112, controller device 116, and autonomy processing device 124 may be coupled to different platforms in the space segment 104. In a particular example embodiment, the platform 128 may be Gateway or another space station around the Moon.

The robotic system 100 further includes a camera vision system 130 for imaging an environment that the robotic manipulator 112 is in. The camera vision system 130 provides image data to the control device 116 and the autonomy processing device 124 (described further below) that allows the end effector 114 to be positioned in the environment. The camera vision system 130 also records video data during the performance of the robotic operation by the robotic device 112. While one camera vision system 130 is shown in Figure 1, it will be understood that multiple camera vision systems 130 may be present at different locations (on the robotic device 112 or independent therefrom) and record images or video of various aspects of the robotic operations. For example, camera 130 may be considered an end effector camera and additional cameras may be present such as boom cameras and 360 degree cameras. Some cameras may be capable of pan-tilt-zoom (PTZ).

In some embodiments, the camera vision system 130 may be configured to capture image data of a machine vision marker present on a payload (e.g., on payload 132). The machine vision marker may encode information about the marker or payload (e.g., identifying information, physical properties, etc.). The captured image data may then be processed by the control device 116 or autonomy processing device 124 to identify the machine vision marker and/or the payload. In some cases, the identity or other information obtained from processing the image data may be used by the system 100 to determine what operation the manipulator 112 or end effector 114 will perform or to confirm that the payload is the correct payload or payload type to receive the service of the end effector 114.

The end effector 114 is configured to perform one or more robotic functions. The robotic functions may be referred to as or enable the provision of services. For example, the end effector 114 may be configured to grapple and rigidize a payload (e.g., payload 132), transfer torque to a payload, transfer power to a payload, or transfer data to a payload. In some cases, the payload may be a tool, and the end effector 114 is configured to grapple and rigidize the tool and provide one or more services (e.g., mechanical, electrical) to enable operation of the tool and provision of the tool's service. In an example, the tool may be a refueling tool.

The space segment 104 includes a payload 132. The payload 132 is on platform 128. In other embodiments, the payload 132 may be on a different platform from the robotic manipulator 112.

The payload 132 may be any object that is to be interacted with by the robotic manipulator 112 and the end effector 114. For example, the payload 132 may be a payload that is to be moved by the robotic manipulator 112 or serviced by the end effector 114. In a particular example, the payload 132 may be a servicing tool that is configured to provide mechanical or electrical services to another payload.

In another example, the payload 132 may be a free flying object. The free flying object may be a spacecraft that is to be captured and docked to the platform 128.

In some embodiments, the end effector 114 may be a multi-purpose end effector configured to perform multiple robotic functions or interface with multiple different payload types.

The payload 132 has a grapple fixture 134 mounted thereto. The grapple fixture 134 may be a standardized grapple fixture interface. The end effector 114 is configured to grapple the grapple fixture 134 and rigidize the grapple fixture 134, thereby rigidizing the payload 132 to the robotic manipulator 112.

In the embodiment of Figure 1, the grapple fixture 134 includes a grapple probe 136 mounted to a base 138. The base 138 is mounted to the payload 132. The end effector 114 includes a probe guiding surface, a grapple mechanism, and a couple element. The robotic manipulator 112 moves the end effector towards the grapple fixture 134, causing the probe 136 to contact the probe guiding surface of the end effector 114, which guides the probe 136 into the grapple mechanism. The grapple mechanism grabs the probe 136 and retracts the probe 136 to a point at which the grapple fixture 134 is rigidized to the end effector 114. This includes bringing the base 138 into contact with the coupling element on the end effector 114, which may promote alignment of the grapple fixture 134. The profile of the coupling element and the base 138 are complementary. In some cases, the coupling element and the base 138 may be configured such that their mating restricts rotational movement of the grapple fixture 134 (and thus may rigidize in the roll direction).

In other embodiments, such a grapple fixture may not be present and the end effector 114 is configured to grapple the payload 132 without a designated grapple fixture.

In some cases, the payload 132 may include a prepared interface for enabling the end effector 114 to interface in multiple different ways with the payload 132. For example, the prepared interface may include two or more of a grapple fixture 134, a machine vision marker, and at least one auxiliary services module. Auxiliary services may include, for example, a torque receiver (e.g., torque bolt), a power receiving module (electrical connectors), or a data receiving module (data connectors). The auxiliary services module may implement a passthrough functionality which enables the end effector to deliver the auxiliary service to the payload through a standardized interface (the prepared interface).

The ground segment 102 of system 100 includes a robotic ground operator station 108 (or robotic workstation 108).

The operator station 108 includes one or more computing systems 136 including processors and memories storing processor executable instructions, as well as user interfaces and user input devices for the operator to interact with the computer system and control the space segment 102 components.

The computer system 136 of ground segment 102 executes ground segment software for performing the functions of the operator station 108. The ground segment software includes an automated mission planning software application 110.

The automated mission planning software module 110 includes a user interface module for enabling an operator user to interact with the system 100 (e.g., through displaying data generated by the automated mission planning software 110 and receiving input on data to be processed by software 110 sent to the space segment 104).

The automated mission planning software application 110 is configured to automatically generate a task (a single robotic action or a sequence of robotic actions) to be performed by the robotic device 112. Task generation may use a model-based implementation that stores and navigates through states to produce or repair task plans using one or more algorithms. In an embodiment, the automated mission planning software application 110 is configured to automatically generate a task to be performed by the robotic device 112 to achieve a mission goal based on the logical rules of the domain, mission constraints, and initial conditions. Inputs to the task planning process may be provided by a human operator through the user interface of the automated mission planning software application 110 at the operator station 108. Outputs of the task planning process may be displayed in the user interface at the operator station 108 for review and confirmation by a human operator. The operator may confirm the generated task by providing an input through the user interface, which may cause the approved task to be uplinked to the space segment 104 via the communication link 106.

The automated mission planning software application 110 may also be configured to repair an existing task plan if the robotic device 112 is unable to complete successfully per the initial task plan.

In some embodiments, aspects of the automated mission planning software 110 may be implemented in the space segment 104 rather than on ground 102.

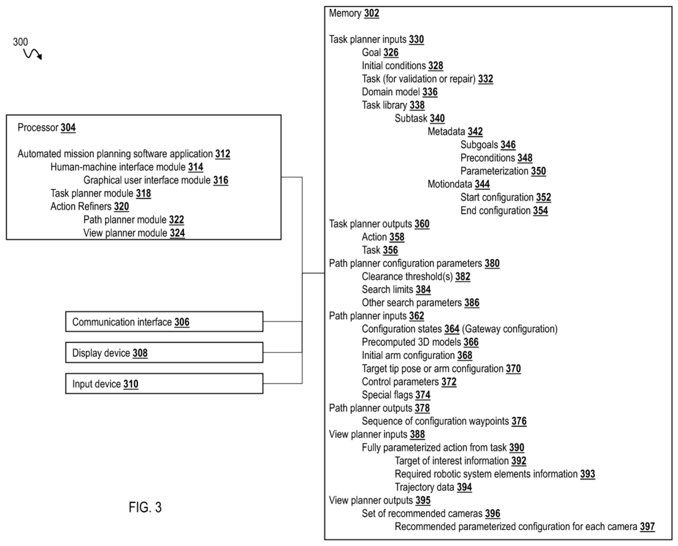

Referring now to Figure 3, shown therein is a computer system 300 for automated mission planning, according to an embodiment. The computer system 300 may be implemented at operator station 108 of Figure 1 (e.g., at computer system 136). The system 300 may be used to plan a task to be executed by a robotic device, such as robotic device 112 of Figure 1.

The system 300 may be configured to implement any one or more of the methods described herein or portions thereof.

The system 300 may be implemented in the system 100 of Figure 1. For example, components of the computer system 300 may be implemented at one or more devices in ground segment 102 (e.g., computer system 136 of operator station 108) and/or at one or more devices in space segment 104 (e.g., robotic controller device 116).

The system 300 includes a memory 302 and a processor 304 in communication with the memory 302.

The processor 304 is configured to execute various software modules and components. In some embodiments, modules or components executed by the processor 304 may include server-side software components and client-side software components that communicate with each other in order to provide various features and functionalities of the system 300. In some cases, server-side components may be executed at a server computer and client-side components may be executed at a user device.

The system 300 includes a communication interface device 306 for transmitting and receiving data to and from other computing devices. The communication interface device 306 may include a network interface device for transmitting and receiving data via a network connection (e.g., local area network, wide area network, etc.). The network connection may be wired or wireless connection.

The system 306 includes a display device 308 for displaying data generated by the system 300. The display device 308 may be located at a user device, such as at operator station 108 of Figure 1.

The system 300 includes an input device 310 for receiving input data from a user interacting with the system 300. For example, a user may use input device 310 to interact with the system 300 through a graphical user interface generated by the processor 304 and displayed via the display device 308. The input device 310 may be located at the user device, such as at operator station 108 of Figure 1. A user input may include, for example, initial conditions for planning a task or a command to uplink an approved task.

The processor 304 executes an automated mission planning software application 312 ("MPS application 312"). The MPS application 312 may be the software application 110 of Figure 1.

The MPS application 312 includes a human-machine interface module 314 including a graphical user interface module 316, a task planner module 318 (task planner 318), and action refiners 320 including a path planner module 322 (path planner 322) and a view planner module 324 (view planner 324).

The graphical user interface (GUI) module 316 is configured to enable a user to interact with the MPS software application 312, including providing inputs to the MPS software application 312 and reviewing outputs from the MPS software application 312.

In particular, the GUI module 316 is configured to receive one or more goals 326 and initial conditions 328 for a task to be planned as input from a user. The goal 326 and initial conditions 328 are stored in memory 302 as task planner inputs 330. Goals 326 are specified as a set of logical states that must be true upon completion of the task. The initial conditions 328 provide initial conditions for task planning and validating plans.

In some cases, the GUI module 316 may receive a task for validation or repair 332 as an input from a human operator. The task for validation or repair 332 is stored in memory 302 as a task planner input 330.

The memory 302 also stores a domain model 336 and a task library 338. The domain model 336 and the task library 338 are inputs 330 used by the task planner 318. In other embodiments, the task library 338 may be configured as an activity library where there are goals specified for each entry in the library (i.e., therefore being Activities and not just Tasks).

The domain model 336 provides an abstract, logical model of the world that can be used by the MPS application 312 for reasoning. The domain model 336 encodes the "rules of the world" and provides the logical statements that can be made, the objects in the world, and the actions that the robotic device 112 can take.

In an embodiment, the domain model 336 encodes the following: (i) declarations of classes and objects in the world; (ii) definition of the logical predicates that can be used to describe the states of the world ("world state predicates"); and (iii) definition of every standard action that can be taken by the robotic device 112, including their preconditions and effects ("standard action definition"). Relevant flight rules may be incorporated in the action definition as applicable.

In an embodiment, contents of the domain model 514 includes types, constants, functions, predicates, and actions.

Types represent classes of objects in the world. These may be elements of the robotic device 112 or system 100 elements in the space segment 104 that may interact with and/or be manipulated by the robotic device 112.

Constants represent objects that will always exist in the world regardless of the initial conditions.

Functions defines numeric or object fluents to respectively keep track of numerical quantities or object relationships.

Predicates are logical symbols that evaluate to either true or false based on one or more states of the world.

Actions define the possible ways one can change the state of the world.

The mission goals and constraints that are provided to the MPS application 312 for a particular planning problem may be expressed using the functions and predicates of the domain model 336, but they are not considered a problem of the domain model 336 itself.

The task library 338 is a library of pre-validated, reusable tasks 340 (subtasks). The task library 338 provides a selection of pre-validated tasks 340 to the MPS application 312 and the human operator for mission planning. The pre-validated tasks are known as subtasks 340. These subtasks 340 contain the necessary information to perform commonly used sequences of actions.

Each subtask 340 may include associated metadata 342 and motion data 344. Metadata 342 includes subgoals 346, preconditions 348, and parameterization 350. Motion data 344 includes a start configuration 352 and an end configuration 354. The motion data 344 also includes one or more intermediate configurations which allow the robotic device to track a specific trajectory from start 352 to end 354.

The task library 338 is queried by the task planner 318 to see if an existing subtask 340 or set of subtasks 340 with the appropriate set of parameter values can achieve the goal 326 (i.e., meeting the search criteria that is used to filter for applicable subtasks).

The task library 338 can provide subtasks 340 to the task planner 318. The task planner 318 may be able to produce subtasks 340 for the task library 338, but it is a human decision whether a task gets added to the task library 318 as a subtask 340 or not.

When planning an operation, subtasks 340 from the task library 338 may be combined with actions planned from scratch (i.e., ab initio) to perform an entire activity. An "activity" is a "task" that has a "goal" (i.e., one or more conditions that must be true) associated with it.

In an example, a complex payload relocation Activity that involves moving payload X (e.g., payload 132) from location B to C and payload Y from location A to B may comprise a subtask to move payload X from location B to C, bridging Actions to move the arm 112 from the end of the first subtask (i.e., location C) to the start of the next subtask (i.e., location A), and a subtask to move payload Y from location A to B. In the foregoing example Activity, the initial conditions 328 may include: Payload X is at location B, payload Y is at location A, location C is unoccupied, robotic manipulator is based on grapple fixture alpha with joint configuration of <initial joint configuration>.

The use of subtasks 340 may advantageously reduce planning time by removing the need to replan common parts of an activity.

In an embodiment, the process of planning using the task library 338 commences when the MPS application 312 receives a goal 326 to perform through the GUI 316.

The task planner 318 automatically decomposes a goal 326 into subgoals. Using the above example of an Activity, the Goal 326 would be "Payload X installed at location C and Payload Y installed at location B". The task planner 318 decomposes this goal 326 into subgoals including "Payload X installed at location C" and "Payload Y installed at location B".

Where possible, the task planner 318 matches the subgoals to subtasks 340 from the task library 338. The matched subtasks 340 are then used to compose the overall task (i.e., task 356 described below) for the activity.

In most cases, it is likely that an end to end task 356 will not be composed solely of library subtasks 340. So, the MPS application 312 is configured to generate parts of the task 356 using its standard task planning function.

Subtasks 340 are designed to be reusable, so that activities can be planned faster.

In an embodiment, in order for subtasks 340 to be reused in task planning, the necessary pre-conditions and post-conditions of the subtask 340 are encoded within the task. These conditions reflect the location of robotic device 112 elements and any relevant payloads or worksite states.

In an embodiment, as described above, a library task 340 is composed of metadata 342 and motion data 344.

The library task 340 may be queried by the task planner 318 using the metadata 342.

The metadata 342 may express key aspects of the subtask 340 that can determine whether a subtask 340 can be used in the current world state and whether the desired effect will be achieved.

Key concepts that may be captured in the metadata 342 include subgoals 346, preconditions 348, and parameterization 350.

Subtasks 340 may have an accompanying subgoal 346 that indicates what the subtask 340 aims to accomplish. Using the previous example of the complex payload relocation Activity, a subgoal may be "Payload X installed at location C".

Preconditions 348 are conditions that must be met in order to execute a subtask 340. Using the previous example of the complex payload relocation Activity, a precondition may be "location C is unoccupied".

Parameterizations 350 are parameters that can be varied for a subtask 340, having an impact on a subtask's 340 reusability. Using the previous example of the complex payload relocation Activity, a parameter may be the identity of the payload.

In a particular embodiment, metadata 342 of a subtask 340 includes the following items:
(i) Header info: a task ID or task version number.
(ii) Preconditions: constraints that dictate the conditions required to be true in order to use/execute this task. Constraints can include vehicle mode, configuration, resource levels, and/or condition or state of objects, devices, or properties. Properties may include, for example, power on/off, operational vs keep-alive state, electromagnetic interference (e.g., from a high gain antenna slew angle), solar flux (e.g., from a solar storm), or other properties that may vary in an environment and cause different plan outcomes.
(iii) Task parameter: parameters of a subtask 340 that can be changed (e.g., payload class).
(iv) Reference to subtask: a reference to which subtasks 340 were used to compose the current subtask (if applicable).
(v) Invariant conditions: a set of constraints on conditions that must be true (or must not change) through the task execution.
(vi) Estimated resource usage: expected resource usage during and upon successful completion of the task (e.g., time, power).
(vii) Completion effect: constraints that describe the states/conditions changes expected due to task execution.
(viii) Failure actions/impacts: map to actions or impacts (e.g. tie to fault management) upon task failure.

Metadata 342 may provide multiple routes to search for necessary tasks 340. Metadata 520 may be used to filter subtasks 340 in the task library 338.

For example, the task library 338 may be filtered based on an estimated resource usage, so only subtasks 340 that meet a given time or power criteria can appear.

A library task 340 uses motiondata 344 to store the initial and final configurations for motion execution. In an embodiment, motiondata 344 structure includes the following items:
(i) Start configuration: the initial joint angles of the robotic device 112.
(ii) End configuration: the final joint angles of the robotic device 112.
(iii) Intermediate configuration(s): define the trajectory from start configuration to end configuration.

In an embodiment, the task planner 318 is given a description of the possible initial states of the world (or domain), a description of the desired goals, and a description of a set of possible actions. The task planner 318 synthesizes a plan that is guaranteed (when applied to any of the initial states) to generate a state which contains the desired goals.

Another embodiment of the task planner 318 will now be described in further detail. Parameters of the task planner 318 include the domain model 336 and the task library 338. Inputs 330 to the task planner 318 include a goal 326 and initial conditions 328 (in some cases a task for validation/repair 332). Outputs 360 of the task planner 318 include actions 358 and a task 356.

The primary function of the task planner 318 is to generate tasks when invoked by the MPS application 312. The tasks may be space robotics tasks (i.e., tasks to be performed by a space robotics system).

The task planner 318 receives one or more goal(s) 326 as input from the human operator via the GUI 316. Goals 326 may be specified as a set of logical states that must be true upon completion of the task.

The task planner 318 employs the domain model 336 in order to understand the logical statements that can be made to describe the world, the objects in the world, and the actions that the robotic device 112 can take.

The task planner 318 acquires the initial conditions 328 of the space segment 104 of the robotic system 100 for the task. The initial conditions 328 are received as input via GUI module 316. In other embodiments where the task planner 318 is implemented is the space segment 104 (e.g., at robotic controller device 116 or other processor on platform 128), the initial conditions 328 may be received from a telemetry adapter which converts the telemetry into the appropriate format.

The task planner 318 also uses task library 338. The task library 338 is populated with pre-validated tasks 340.

In an embodiment, the task planner 318 takes the goals 326, initial conditions 328, the task library 338, and the domain model 336, and generates a task 356 which brings the world to a state that satisfies the goal 326 specifications. The task 356 is stored in memory 302. In an embodiment, tasks 356 will attempt to minimize a particular cost metric when generated but are not required to be globally optimal.

The task 356 is composed of a single action 358 or a sequence of actions 358. Some actions 358 may require refinement to fill in parameters which the task planner 318 alone does not have enough details to plan.

For example, a Move type action may require a configuration path which requires 3D knowledge of the platform 128 geometry.

When needed, the task planner 318 calls the appropriate action refiner 320 in order to fully parameterize the action 358. The action refiners 320 are mapped to specific actions 358. This enables the task planner 318 to call the action refiner 320 for the specific action 358.

Where applicable, the task planner 318 synthesizes multiple individual actions 358 into a task 356.

The planned task 356, comprising a partially-ordered sequence of fully parameterized actions 358, is provided to the GUI module 316 for review by the human operator.

In some embodiments, the task planner 318 is further configured to perform goal decomposition. Goal decomposition (if logically possible) is performed, given a set of initial conditions 328 and the domain model 336. Goal decomposition is the process of breaking goals 326 down into smaller subgoals to allow for easier matching to subtasks 340 in the task library 338.

In some embodiments, the task planner 318 is further configured to perform task validation. In an embodiment, task validation may be performed to verify that the current conditions of the platform 128 satisfy the preconditions of a task 356. When preconditions are met, the task 356 is valid and can be executed. In another embodiment, task validation may be performed by starting from the current initial conditions, propagating forward using the domain model, determining whether every action's preconditions will be met, and whether, in the end, every goal condition will be satisfied.

In some embodiments, the task planner 318 is further configured to perform activity repair. Activity repair is performed when a task 356 is invalidated by current conditions and will not satisfy the goal 326 of the activity. As noted above, an Activity is a Task 356 that has a Goal (i.e. a condition that must be true) associated with it. The task planner 318 repairs the task 356 by planning from the current conditions to the goal 326 specification.

The task planner 318 receives the initial conditions 328 from the HMI module 314. The initial conditions (inputs) 328 together with the domain model 336 and the task library 338 are used to generate actions 358.

The task planner 318 interfaces with action refiners 320 to populate parameters of actions 358, where necessary. When the Task Planner 318 generates an Action 358 that involves motion, such as an Action 358 to move the robotic arm, the Action 358 does not contain the motion-related parameters (e.g., the waypoints that the arm needs to move through) since the Task Planner 318 does not have any geometric knowledge of the world. To fully specify the waypoints, the Task Planner 318 invokes the appropriate action refiner 320 (in this case the Path Planner 322) to compute the required waypoints 376 for the Action 358. The fully parameterized Action to move the robotic arm is one that contains the computed waypoints 376.

The task planner 318 outputs the sequence of fully parameterized actions as a task 356, back to the HM1314.

The system 100 is employed to validate tasks prior to execution. The origin of these tasks for validation may be a human operator or the autonomy processing device 124.

The task planner 318 may permit the specification of dependencies between actions 358 which constrain the order in which actions 358 are to be executed.

The task planner 318 is able to populate tasks 356 with any action that is defined in the domain model 336. There may be some situations where the ground operator wants to plan and execute something that was not anticipated by or modeled in the domain model 336. They will need to have some means of specifying a user-defined action. The ground operator can author the action in the same way that they would write an executive script; however, this script now gets loaded and executed as part of the autonomous task execution, rather than having to be initiated manually.

As described above, the task planner 318 may provide an action 358 to an action refiner 320 to populate parameters of the action 358 where the task planner 318 does not have enough information to plan.

Action refiners 320 include path planner 322 and view planner 324. In other embodiments, action refiners 320 other than path planner 322 and view planner 324 may be used (e.g., whether along with them or without them). The action refiners 320 used may vary depending on the robotic domain.

The path planner 322 executes a path planning algorithm. The path planner 322 is configured to automatically recommend a sequence of maneuvers from an initial arm configuration to a desired tip pose or configuration, given precomputed conservative 3D models of the environment (including any keep-out zones), manipulator, and payload.

In an embodiment, the planned maneuvers go beyond being simply collision-free, and in fact guarantee that a given minimum clearance between the 3D models is satisfied at all points along the path.

Inputs 362 to the path planner algorithm include configuration states 364 (including the platform 128 configuration), precomputed 3D models 366, an initial arm configuration 368 (i.e., of robotic device 112), a target or final pose or configuration 370 (e.g., 6DOF tip pose or arm configuration), any control parameters 372 that govern the optional behaviours of the algorithm, and special flags 374.

Configuration states 364 include the current states of both the robotic device 112 (e.g., arm configurations, locations of tools, which payloads are attached) and platform 128 (e.g., modules and payloads present, their locations, and the pose of articulated structures).

Precomputed 3D models 366 include precomputed collision avoidance models of all bodies. Bodies are the physical objects in the world. For example, a robotic arm 112 may be made up of the following bodies: a base end effector, joints 120, boom 118, tip end effector 114.

The target pose or configuration 370 includes the desired end state of the manipulator 112. In some cases, this may be a 6DOF pose of the tip of the arm 112 where motions are planned between high hover points; however, in a manual use case or an activity repair situation, the target pose or configuration 370 may be a 7DOF joint configuration of the manipulator 112 that is known.

Special flags 374 include other data needed to properly plan. Examples include data identifying which robotic device (in the case of more than one robotic device, such as multiple robotic arms), high/low speed (for determining clearance thresholds), locking of a shoulder joint, etc.

The path planner 322 outputs a series or sequence of configuration waypoints 376. The sequence of configuration waypoints 376 is stored in memory 302 as a path planner output 378. As an alternative, the path planner 322 may be called with a target arm configuration instead of a target tip pose (i.e., target or final configuration 370).

In an embodiment, the output of the path planner algorithm are joint configurations of the arm 112. These joint configurations are waypoints for motion commands in joint space, where the intermediate configurations computed by a manipulator control system have also been verified to be collision free with clearance.

In an embodiment, the path planner 322 is configured to attempt to balance distance travelled with clearance from structure but is not required to solve a global optimality problem.

In an embodiment, the path planner 322 use the same models as a model-based collision avoidance (MBCA) algorithm, such that the path planner 322 will not plan a path that MBCA does not allow to execute. The MBCA is a software component that checks for collisions during execution in flight. In some embodiments, the path planner 322 uses the same collision avoidance checking software and 3D models during planning as are used by the MBCA in flight for consistency.

The path planner 322 is employed during path planning and not during path execution.

During execution, the robotic arm 112 may use a target-based vision system and force moment accommodation to guide the arm 112 through proximity waypoints 376 to the final target.

The path planner 322 may be invoked in two ways. For actions 358 involving arm 112 motion, the path planner 322 is invoked as an action refiner 320 to fully specify the parameters of planned actions 358.

Second, ground operators may wish to plan a collision free path while developing a manual procedure, for example, as part of extravehicular activity (EVA) support. The operator supplies all of the relevant inputs and the output of the path planner 322 is provided as a recommendation.

Example inputs 362, outputs 378, and notional configuration parameters 380 of the path planner 322 will now be described, according to an embodiment.

Configuration parameters 380 include clearance thresholds 382, search limits 384, and other search parameters 386.

Clearance thresholds 382 specify a minimum acceptable distance between the precomputed models 366. There may be a set of these, for example, for high and low speed settings. Note that these values may be slightly higher than those used by the MBCA to provide margin for tracking errors.

Search limits 384 include limits on memory usage and processing time implemented due to the path planner 322 being used in a resource-constrained space segment 104. If a solution cannot be found within those limits, the algorithm will terminate.

Other search parameters 386 may include flags for performing smoothing or weighing distance traveled versus duration.

View planner 324 will now be described.

View planner 324 is configured to intelligently provide operators with recommendations for camera selection and parameters for monitoring operations.

Cameras available for recommendation include all robotic device 112 supporting cameras (e.g., end-effector cameras such as camera subsystem 130, boom cameras, 360 degree cameras), and may involve all platform 128 external cameras.

Inputs 388 to the view planner 324 include a fully parameterized action 390 from the task 356 which contains information regarding the target of interest 392, the required robotic device 112, elements 393, and trajectory data 394.

Outputs 395 of the view planner 324 include a set of recommended cameras 396, each containing recommended parameterized configurations (e.g., pan and tilt angles). The recommendation 396 may be a single camera, or a group of relevant cameras (for example, the top three), and may be divided into classes (for example, "focused" vs. "big picture" views). For the cameras which are capable of pan tilt zoom (PTZ), the view planner 324 provides estimated PTZ parameters.

In some embodiments, the computer system 300 may include a procedure model. The procedure model is an interlinked database of past work that enables reuse of planning products generated by the system 300 and identification of planning products that may be impacted by a change.

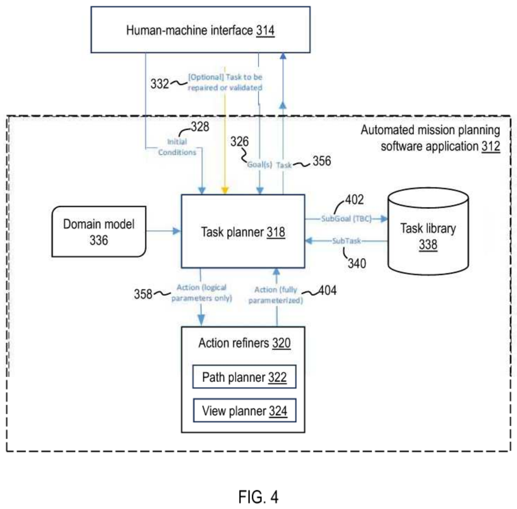

Referring now to Figure 4, shown therein is the automated mission planning software application 312 of Figure 3 illustrating data flow between components, according to an embodiment.

MPS application 312 includes human-machine interface 314, domain model 336, task planner 318, task library 338, and action refiners 320 including path planner 322 and view planner 324.

The task planner 318 receives inputs including goal(s) 326 and initial conditions 328 from human machine interface 314. Optionally, the task planner 318 may receive as input a task to be repaired or validated 332.

The task planner 318 decomposes goal 326 into subgoals 402. The task planner 318 queries the task library 338 using a subgoal 402 to see if there is a library task (subtask 340) that matches the subgoal 402 that can be used. For example, the metadata 342 of the subtasks 340 in the task library 338 may be queried using the subgoal 402 to determine if there is a subtask 340 with a matching subgoal 346.

The task library 338 returns the subtask 340 with a subgoal 346 matching the subgoal 402 to the task planner 318.

The task planner 318 may perform this querying for library tasks 340 for multiple subgoals 402.

The task planner 318 generates planned actions 358 comprising logical parameters only.

Where there is a need to populate or further specify parameters of an action 358, the task planner 318 outputs the planned action 358 to an action refiner 320, such as path planner 322 or view planner 324.

The action refiner 320 generates a fully parameterized action 404. In the case of the path planner 322, the fully parameterized action 404 includes a sequence of configuration waypoints 376. In the case of the view planner 324, the fully parameterized action 404 includes a set of recommended cameras 396 and a recommended parameterized configuration for each camera 397.

The fully parameterized action 404 is provided to the task planner 318.

The task planner 318 then generates the task 356 as a sequence of fully parameterized actions.

The task planner 318 outputs the task 356 to the HMI 314. The HMI 314 displays the task 356 via the GUI 316 for review by the human operator.

While the above description provides examples of one or more apparatus, methods, or systems, it will be appreciated that other apparatus, methods, or systems may be within the scope of the claims as interpreted by one of skill in the art.

## Claims

1. A method of automated task planning in a remotely operated device system, the method executed by one or more processors, the method comprising:
storing, in a data storage device accessible by the one or more processors:
a domain model for modeling a domain of the remotely operated device system;
a task library including a plurality of subgoals each mapped to a corresponding subtask or set of subtasks that achieves the subgoal, the task library being filterable by subgoal;
receiving, through a human-machine interface, a user input including:
at least one goal;
initial conditions;
automatically decomposing, by a task planner module executed by the one or more processors, the at least one goal into subgoals;
querying, with the task planner module, the task library for matching subtasks using the subgoals;
generating, by the task planner module, a sequence of actions using the initial conditions, the domain model, and the matching subtasks returned by the task library;
returning, by the task planner module, the sequence of actions as a task to the human-machine interface, the task performed by a remotely operated device of the remotely operated device system; and
displaying the task in the human-machine interface.

2. The method of claim 1, wherein the subtask is composed of metadata and motiondata.

3. The method of claim 2, wherein the task library is queried using the metadata.

4. The method of claim 3, wherein the metadata includes an estimate of resource usage for the subtask.

5. The method of claim 2, wherein the motiondata includes a start configuration of the remotely operated device, an end configuration of the remotely operated device, and one or more intermediate configurations of the remotely operated device.

6. The method of claim 5, wherein the remotely operated device is a robotic manipulator comprising one or more joints, and wherein the start configuration defines initial joint angles of the one or more joints, the end configuration defines final joint angles of the one or more joints, and the one or more intermediate configurations define a trajectory from the start configuration to the end configuration.

7. The method of claim 1, further comprising:
determining, by the task planner module, that an action in the sequence of actions requires parameterization that the task planner module cannot plan for;
calling, by the task planner module, an action refiner module mapped to action, the action refiner module configured to parameterize the action by populating the action with one or more missing parameters;
refining the action with the one or more missing parameters to obtain a fully parameterized action; and
composing the task with the fully parameterized action.

8. The method of claim 1, further comprising calling, by the task planner module, an action refiner module to fully parameterize at least one action in the sequence of actions prior to inclusion of the at least one action in the task.

9. The method of claim 1, further comprising:
determining by the task planner module that at least one action in the sequence of actions requires further parameterization; and
populating the at least one action with one or more parameters using an action refiner module called by the task planner module, wherein the action populated with the one or more parameters is included in the task.

10. The method of claim 9, wherein the action refiner module is a path planner module that executes a path planning algorithm configured to automatically recommend a sequence of maneuvers from an initial remotely operated device configuration to a desired remotely operated device pose or configuration using 3D models of the remotely operated device and the environment.

11. The method of claim 10, wherein the 3D models define keep out zones and include collision avoidance models of bodies in the environment.

12. The method of claim 11, wherein the sequence of maneuvers includes a sequence of configuration waypoints for motion commands to be sent to the remotely operated device for task performance.

13. The method of claim 9, wherein the action refiner is a view planner module configured to output a set of recommended cameras, each including recommended parameterization configurations.

14. The method of claim 1, wherein the remotely operated device system is a space robotic system, the remotely operated device is a robotic device, and the task is a robotic task to be performed by the robotic device.

15. A system for automated task planning in a remotely operated device system, the system comprising:
an input device for receiving at least one goal from a user through a human-machine interface;
a data storage device for storing (i) the at least one goal and (ii) a task library including a plurality of subgoals each mapped to a corresponding subtask or set of subtasks that achieves the subgoal, the task library being filterable by subgoal;
one or more processors in communication with the data storage device, the one or more processors configured to:
automatically decompose the at least one goal into subgoals;
query the task library for matching subtasks using the subgoals;
generate an action or a sequence of actions using the matching subtasks returned by the task library;
returning the action or sequence of actions as a task to the human-machine interface, the task performed by a remotely operated device of the remotely operated device system; and
a display device for displaying the task in the human-machine interface.
